# EUROPEAN PATENT APPLICATION

(11) **EP 2 395 324 A1**
(43) Date of publication of application: **14.12.2011**
(21) Application number: 10460022.6
(22) Date of filing: 09.06.2010
(51) Int. Cl.: G01C 21/00, B60R 11/02, G01D 11/24, H04M 1/60

(54) **Electronic device holder**

(71) Applicant: BURY Sp. z o.o., 39-300 Mielec (PL)
(72) Inventor: Luksis, Slawek, 37-112 Kosina (PL)
(74) Representative: Kaminski, Zbigniew

(57) **Abstract**

The holder for an electronic device, especially a mobile phone, for a mechanical vehicle, which can also accommodate various replaceable electronic modules, especially a GPS module or a GPS supporting module, characterized in that it consists of a holding unit 1, which accommodates an electronic device, and of an additional replaceable element 2, which is favourably connected detachably with the said holding unit and which includes an additional replaceable electronic module 4 and an electric connection 6, which is adapted to provide an electric connection with the device.

## Description

This invention relates to a holder for an electronic device, especially a mobile phone, to be installed in mechanical vehicles, that enables using an additional module, especially a GPS module or a GSP supporting module.

In the recent years electronic devices, especially mobile phones, that are provided with various electronic modules enabling additional functionalities such as GPS navigation, audio and movie players, have been more often used.

Additional modules of this type are known and built-in into electronic devices, especially mobile phones, or have a form of independent modules in a separate casing, which are linked with the device by means of a cable or wirelessly.

The German utility model DE 203 20 388 U1 discloses a mounting system for a radio-communication terminal, e.g. a hands-free set, the said system is provided with a base, which is fixed immovably to the dashboard or to a central console, or to a support within a vehicle, and a holder, and mechanical connecting members that temporarily link the base and the holder. The holder has the first electric connection, which is adapted to engage with the second electric connection located in the base. There is a GPS receiver in the base, into which a GPS signal is fed and, then, transformed into data on the geographical position. The mounting system is provided with electric connections, which are used to transmit the position-related data from the GPS receiver sitting in the holder to a radio-communication terminal.

The German patent DE 103 19 114 A1 discloses a parking control system comprising a data carrier within a vehicle, which is adapted to contain saved control data on the locations of the data carrier's stay, and a portable control device for automatic reception of data concerning the controlled locations of the data carrier's stay, the said portable device being connected to a positioning system (GPS) that enables identification of a current position of the control device, which a computing device, adapted to compare the current position of the control device to the data collected from the data carrier, is assigned to.

A major inconvenience of these solutions known in the state-of-the-art is the necessity to interconnect two separate devices with separate casings being connected by means of a cable or wirelessly.

This is an objective of this invention to provide a holder for an electronic device, especially a mobile phone, for a mechanical vehicle, that is provided with holding elements, which are adapted to hold additional electronic modules, e.g. a GPS module or a GPS supporting module, and are connected with the holder by means of a snap joint.

According to the invention there is provided a holder, characterised in that it consists of a holding unit, which is adapted to accommodate an electronic device, and of an additional replaceable element, which is favourably connected detachably with the holding unit and which is adapted to hold an additional replaceable electronic module, and of a connecting unit, which is adapted to provide an electric connection with the electronic device.

The additional replaceable element is favourably provided with a slot, which has a negative shape of the additional replaceable electronic module and which is adapted to hold the said additional replaceable electronic module.

The holding unit is favourably provided with a cavity, which is located in that portion of the holding unit where the connection with the additional replaceable element is made, and into which the additional replaceable element of a shape conforming to the cavity enters.

The additional replaceable element is favourably connected with the holding unit by means of a snap joint.

The snap joint is favourably formed by angular oblong gaps in the holding unit and by flexible slides, which are adapted to interlock with the angular oblong gaps and are located in the additional replaceable unit, the locations of the angular oblong gaps and of the flexible slides may be interchanged.

The additional replaceable element consists favourably of a base and a cover, between which the additional replaceable electronic module sits.

The first tests of the mobile phone holder, according to the invention, proved it was a fully useful and a general-purpose holder suitable for various electronic modules connected with the primary electronic device resting in the holder.

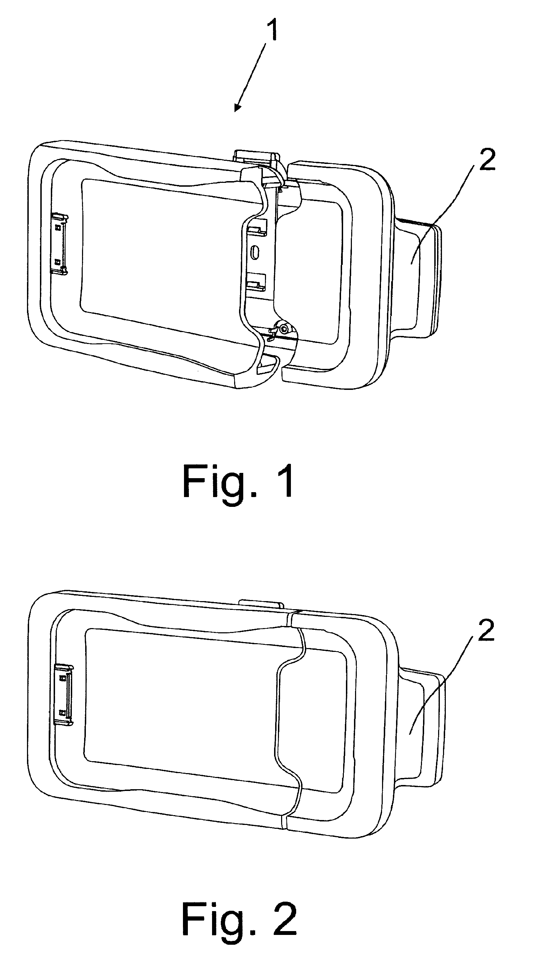

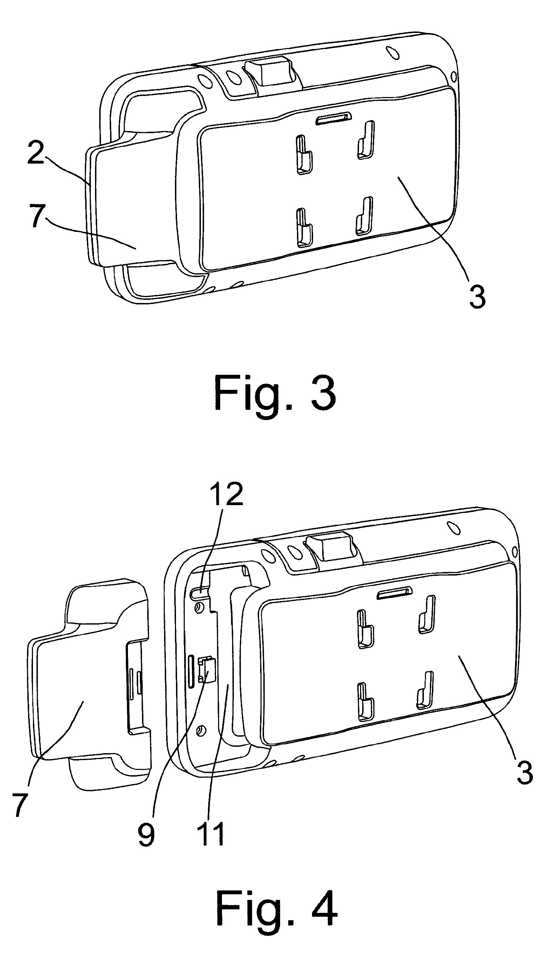

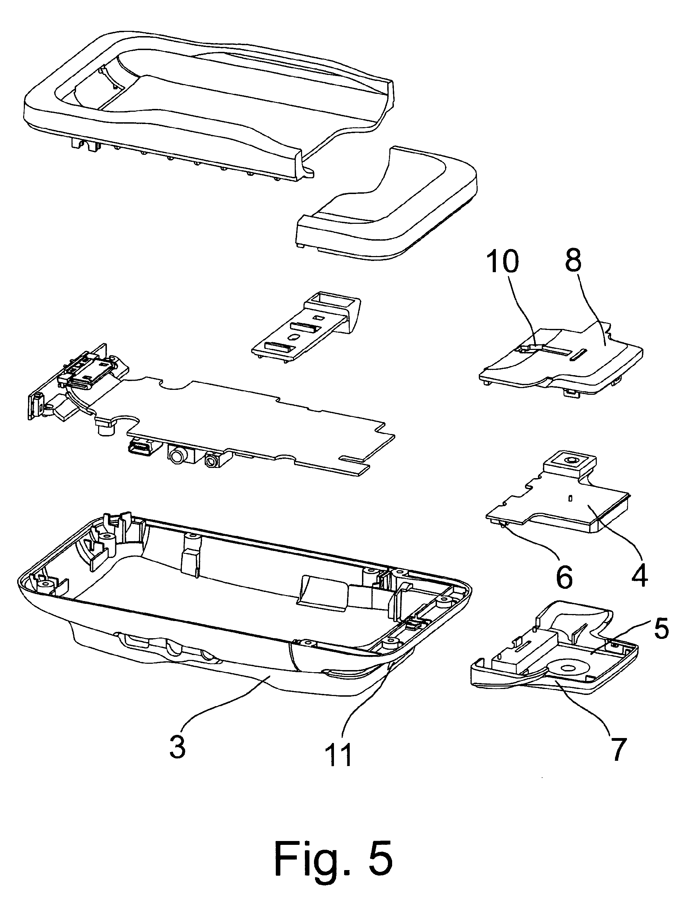

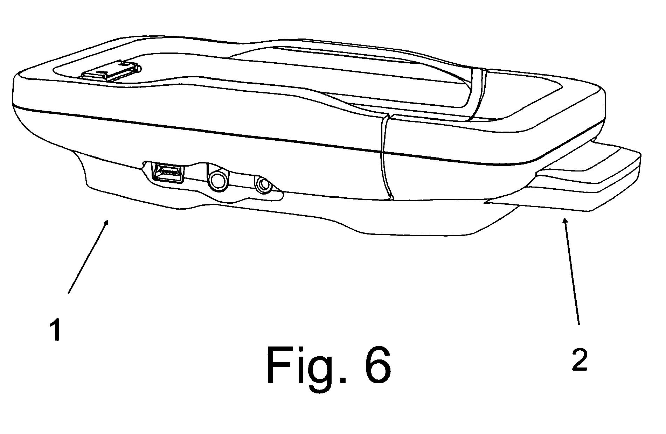

The holder for an electronic device, especially a mobile phone, for a mechanical vehicle, is depicted on the drawings, where: Fig. 1 - is a perspective front view of the holder, according to the invention, with the additional replaceable element, which includes the additional electronic module; Fig. 2 - is a perspective front view of the same holder with the additional replaceable element in the as-pushed position; Fig. 3 - is a perspective rear view of the holder, connected to the additional replaceable element, which includes the additional electronic module; Fig. 4 - is a perspective rear view of the same holder with the additional replaceable element in the as-pushed position; Fig. 5 - is an exploded view of the holder according to the invention; Fig. 6 - is a side view of the holder according to the invention.

The holder for an electronic device, especially a mobile phone, for a mechanical vehicle, as depicted in the Figs., consists of a holding unit 1 for an electronic device and an additional replaceable element 2, which forms a casing for an additional replaceable electronic module 4, e.g. a GPS module or a GPS supporting module.

The holding unit 1 conforms to the shape and size of the electronic device resting in it, e.g. a mobile phone, and is provided with known mounting elements that are adapted to mount the electronic device and with known electric connections. Additionally, it is typically provided with the mounting element 3 that mounts it in the cradle fixed within the vehicle. The holding unit 1 is provided with a cavity 11, which is located in that portion of the said holding unit where the connection with the additional replaceable element 2 is made, and into which the additional replaceable element 2 of a shape conforming to the cavity 11 enters.

The additional replaceable electronic module 4 is provided with a suitable electric connection 6, which is adapted to connect this module with the electronic circuits of the holding unit 1.

In one of the embodiments depicted on the drawing the additional replaceable element 2 of the holder comprises a bi-partite casing, which consists of a base 7 and a cover 8, and in the space between the said base and the said cover there is a slot 5, which has a negative shape of the additional replaceable electronic module 4 mounted in the slot, e.g. a printed-circuit board with electronic elements. Obviously, other designs of the additional replaceable element 2 are possible, as it can have a form of a single casing provided with a slot, into which a replaceable electronic module may be inserted.

The additional replaceable element 2 of the holder is connected with the holding unit, favourably, by means of a snap joint.

In one of the embodiments the snap joint consists of a slide 9 in the holding unit 1 and an angular oblong gap 10, adapted to interlock with the said slide and located in the additional replaceable element 2, however, the locations of the said angular oblong gap and of the said slide may be interchanged.

Obviously, other known forms of a snap joint may be used to connect the holder with the additional replaceable element.

The electronic device resting in the holding unit 1 is operable also when the additional replaceable element 2 with the additional replaceable electronic module 4.

The holder, according to the invention, is of general-purpose nature and may be used to hold various electronic devices, e.g. a Bluetooth module, a Wi-Fi module, a GPS module, an antenna interface or other receiving-sending devices, whereas the additional replaceable element may be used to accommodate various additional electronic modules, e.g. hands-free sets, Bluetooth devices, Wi-Fi devices, an antenna interface.

The invention is not limited to the embodiments presented above but includes also any modifications and changes thereof, especially those aiming at making these embodiments adapted to particular electronic devices resting in the holder and to respective replaceable modules used.

## Claims

1. The holder for an electronic device, especially a mobile phone, for a mechanical vehicle, which can also accommodate various replaceable electronic modules, especially a GPS module or a GPS supporting module, **characterized in that** it consists of a holding unit 1, which accommodates an electronic device, and of an additional replaceable element 2, which is connected detachably with the said holding unit and which includes an additional replaceable electronic module 4 and an electric connection 6, which is adapted to provide an electric connection with the device.

2. The holder, according to Claim 1, **characterized in that** the additional replaceable element 2 is provided with a slot 5, which has a negative shape of the additional replaceable electronic module 4 and which is adapted to hold the said additional replaceable electronic module.

3. The holder, according to Claim 1, **characterized in that** the holding unit 1 is provided with a cavity 11, which is located **in that** portion of the said holding unit where the connection with the additional replaceable element 2 is made, and into which the additional replaceable element 2 of a shape conforming to the said cavity enters.

4. The holder, according to Claim 1, **characterized in that** the additional replaceable element 2 is connected with the holding unit 1 by means of a snap joint.

5. The holder, according to Claim 4, **characterized in that** the snap joint is formed by flexible slides 9 in the holding unit 1 and angular oblong gaps 10, adapted to interlock with the said slides and located in the additional replaceable element 2 of the holder, the locations of the angular oblong gaps and of the flexible slides may be interchanged..

6. The holder, according to Claim 1, **characterized in that** the additional replaceable element 2 consists of a base 7 and a cover 8, between which the additional replaceable electronic module 4 sits.

## Amended claims

### Amended claims in accordance with Rule 137(2) EPC.

**1.** A holder for an electronic device, especially a mobile phone holder for a mechanical vehicle, which can also accommodate various replaceable electronic modules, especially a GPS module or a GPS supporting module, the holder consists of a holding unit (**1**), which is adapted to accommodate the electronic device, and of an additional replaceable element (**2**), which is connected detachably with the holding unit (**1**), and which includes an additional electronic module (**4**) and an electric connection (**6**), which is adapted to connect the electronic module (**4**) with the electronic circuits of the holding unit (**1**), **characterized in that** the additional replaceable element (**2**) of the holder comprises a bi-partite casing consisting of a base (**7**) and a cover (**8**) and is provided with a slot (**5**) between the base (**7**) and the cover (**8**), which has a negative shape of the additional electronic module (**4**), which is replaceable, the additional replaceable element (**2**) being adapted to hold the additional replaceable electronic module (**4**), wherein the holding unit (**1**) is provided with a cavity (**11**), which is located in a bottom portion of the holding unit (**1**) where the connection with the additional replaceable element (**2**) is made, and into which the additional replaceable element (**2**) of a shape conforming to the cavity enters, and extends downwardly therefrom.

**2.** The holder according to Claim 1, **characterized in that** the additional replaceable electronic module (**4**) includes hands-free sets, Bluetooth devices, Wi-Fi devices or an antenna interface.

**3.** The holder according to Claim 1, **characterized in that** the additional replaceable element (**2**) is connected with the holding unit (**1**) by means of a snap joint, which is formed by flexible slides (**9**) in the holding unit (**1**) and angular oblong gaps (**10**), adapted to interlock with the said slides and located in the additional replaceable element (**2**) of the holder, wherein locations of the angular oblong gaps (**10**) and of the flexible slides (**9**) may be interchanged.
